# FASCICULE DE BREVET EUROPEEN

(11) **EP 4 155 967 B1**
(45) Date de publication et mention de la délivrance du brevet: **12.11.2025**
(21) Numéro de dépôt: 22197846.3
(22) Date de dépôt: 26.09.2022
(51) Int. Cl.: G06F 16/242, G06F 16/2452, G06F 16/2458

(54) **PROCÉDÉ D'ÉCHANGES D'INFORMATIONS SUR UN OBJET D'INTÉRÊT ENTRE UNE PREMIÈRE ET UNE DEUXIÈME ENTITÉS, DISPOSITIF ÉLECTRONIQUE D'ÉCHANGE D'INFORMATIONS ET PRODUIT PROGRAMME D'ORDINATEUR ASSOCIÉS**
VERFAHREN ZUM AUSTAUSCH VON INFORMATIONEN AUF EINEM OBJEKT VON INTERESSE ZWISCHEN EINER ERSTEN UND EINER ZWEITEN EINHEIT, ELEKTRONISCHE VORRICHTUNG ZUM INFORMATIONSAUSTAUSCH UND COMPUTERPROGRAMMPRODUKT DAFÜR
METHOD FOR EXCHANGING INFORMATION ABOUT AN OBJECT OF INTEREST BETWEEN A FIRST AND A SECOND ENTITY, ASSOCIATED ELECTRONIC INFORMATION EXCHANGE DEVICE AND COMPUTER PROGRAM PRODUCT

(30) Priorité: 28.09.2021 FR 2110194
(43) Date de publication de la demande: 29.03.2023
(73) Titulaire: THALES, 92400 Courbevoie (FR)
(72) Inventeur: BLAUDEZ, Eric, 91767 PALAISEAU CEDEX (FR); LORIN, Stéphane, 92622 GENNEVILLIERS (FR)
(74) Mandataire: Lavoix

(56) Documents cités:
- US-A1- 2019 243 914
- CODREANU DANA ET AL: "Open Archive TOULOUSE Archive Ouverte (OATAO) Mobile objects and sensors within a video surveillance system: Spatio-temporal model and queries", 26 August 2013 (2013-08-26), XP055924778, Retrieved from the Internet <URL:https://oatao.univ-toulouse.fr/12854/1/Codreanu_12854.pdf> [retrieved on 20220524]
- P�REZ FRANCISCO J ET AL: "Multimedia analysis platform for crime prevention and investigation", MULTIMEDIA TOOLS AND APPLICATIONS, KLUWER ACADEMIC PUBLISHERS, BOSTON, US, vol. 80, no. 15, 6 February 2021 (2021-02-06), pages 23681 - 23700, XP037497863, ISSN: 1380-7501, [retrieved on 20210206], DOI: 10.1007/S11042-020-10206-Y

## Description

La présente invention concerne un procédé d'échange d'informations sur un objet d'intérêt entre une première entité et une deuxième entité.

La présente invention concerne également un produit programme d'ordinateur et un dispositif électronique d'échange d'informations propres à mettre en œuvre un tel procédé.

En particulier, la présente invention concerne le domaine de l'échange d'informations entre deux entités sur un objet d'intérêt, l'objet d'intérêt étant préférentiellement une personne sous-surveillance. Ladite personne est alors par exemple sous-surveillance par une autorité publique telle que les forces de l'ordre ou par une entreprise du secteur privé.

Lorsque deux entités souhaitent échanger de l'information sur un objet d'intérêt, elles peuvent communiquer entre elles l'information dont elles disposent. Toutefois, dans un souci d'exhaustivité sur l'objet d'intérêt, les entités ont parfois recours à des sources d'informations externes aux deux entités. Cependant, ces sources d'informations externes détiennent la plupart du temps un grand nombre de données informatiques dont seulement une partie concerne l'objet d'intérêt sur lequel les deux entités cherchent à échanger de l'information.

En outre, le format des données informatiques contenues dans chaque source d'informations peut être distinct d'une source d'informations à l'autre. En effet, les données informatiques présentes sur un site de réseautage social tel que *Twitter^{®}* ou *Facebook^{®}* n'ont pas le même format que des données informatiques présentes dans une source d'informations ayant compilé des vidéos de caméra de surveillance.

Ainsi, lorsque les deux entités souhaitent échanger de l'information à partir des données informatiques contenues dans les sources d'informations, le volume de données informatiques échangées est susceptible d'être très grand et d'une grande variété de format. Le volume de données est par exemple plus grand que la capacité de stockage de chacune des première et deuxième entités. Par conséquent, l'échange de la totalité des données des sources d'informations est limité par la capacité de stockage des premières et deuxièmes entités ainsi que par le débit de bus de communication entre les deux entités et les sources d'informations.

Codreanu Dana ET AL: "Open Archive TOULOUSE Archive Ouverte (OATAO) Mobile objects and sensors within a video surveillance system: Spatio-temporal model and queries", 26 août 2013, décrit un système de gestion des données produites par un système de vidéo surveillance permettant d'identifier les éléments pertinents (tels que des personnes, des événements) lors d'une enquête.

US 2019/243914 A1 décrit la comparaison de vecteurs de requêtes entre eux afin d'évaluer la distance entre deux vecteurs.

La présente invention a donc pour but de limiter les quantités de données informatiques échangées entre la première et la deuxième entité sans réduire la qualité de l'information échangée vis-à-vis de l'objet d'intérêt.

A cet effet, la présente invention a pour objet un procédé d'échanges d'informations selon la revendication 1.

En complément facultatif, le procédé est selon l'une quelconque des revendications 2 à 7.

L'invention a également pour objet un produit programme d'ordinateur selon la revendication 8.

L'invention a en outre pour objet un dispositif électronique d'échange d'informations selon la revendication 9.

Différentes caractéristiques et avantages de l'invention seront mis en lumière à la lecture de la description qui va suivre, donnée uniquement à titre d'exemple non limitatif et faite en référence aux figures annexées, sur lesquelles :
- [fig. 1] la figure 1 est une représentation schématique d'un système de communication selon l'invention ; et
- [fig. 2] la figure 2 est un organigramme d'un procédé selon l'invention mis en œuvre par un dispositif électronique d'échange d'informations compris dans le système de communication de la figure 1.

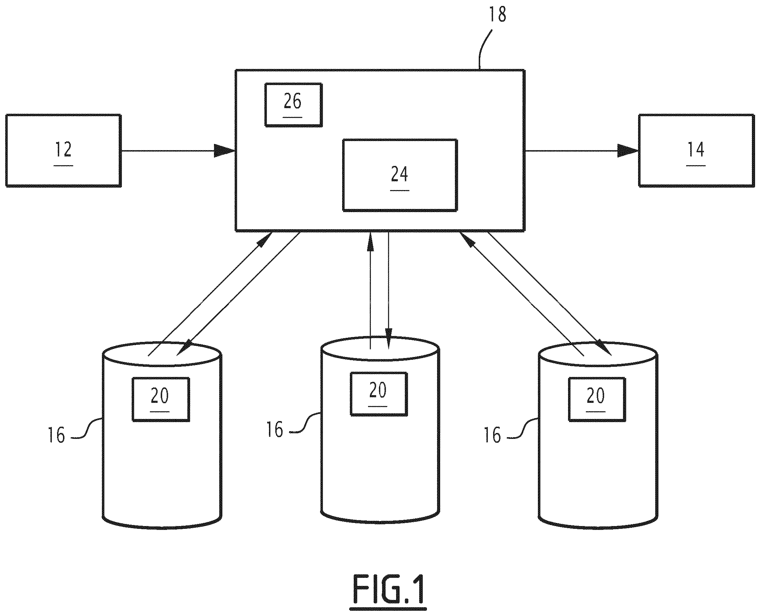

On a représenté, sur la figure 1, un système de communication 10 selon l'invention.

Le système de communication 10 comprend une première entité 12, une deuxième entité 14, des sources d'informations 16 et un dispositif électronique d'échange d'informations 18.

La première entité 12 est par exemple un logiciel, mettant par exemple en œuvre une interface homme-machine. La première entité 12 est configurée pour émettre une requête initiale associée à un objet d'intérêt. L'objet d'intérêt est par exemple une personne sous-surveillance et la requête initiale concerne une demande d'informations sur ladite personne sous-surveillance. A titre d'exemple, la requête initiale concerne par exemple les déplacements d'une personne sous-surveillance dans un intervalle temporel prédéfini. La requête initiale est par exemple fournie par un opérateur à la première entité.

La deuxième entité 14 est par exemple un logiciel de renseignement destiné à mettre en œuvre des fonctionnalités de surveillance de la personne sous-surveillance. Un tel logiciel de renseignement est par exemple directement lié à des bases de données des forces de l'ordre et met en œuvre des fonctionnalités telles que l'évaluation de la dangerosité de la personne sous-surveillance. A cet effet, le logiciel de renseignement détermine des indices de culpabilité sur la personne sous-surveillance. A cet effet, on connaît par exemple les logicels de la suite logicielle *Analyst's Notebook* développé par *IBM^{®}.* Ces logiciels sont notamment utilisés en France par le service central de renseignement criminel, sous le nom *AnaCrim^{®}..* Les fonctionnalités mises en œuvre par la deuxième entité 14 sont connues en soi.

Les sources d'informations 16, au nombre de 3 sur la figure 1, comprennent des données informatiques et sont interrogeables via un moteur de recherche 20 propre à chaque source d'informations 16. Chaque source d'informations 16 est également appelée source 16 dans la suite de la description. Chaque donnée informatique correspond à au moins un élément parmi : un texte, une image ou une vidéo.

Les données informatiques de chaque source d'informations 16 sont par exemple au moins l'un parmi :
- des données informatiques obtenues suite à une écoute de la personne sous-surveillance,
- des données informatiques de géolocalisation de la personne sous-surveillance,
- de données vidéo issues d'une caméra de surveillance,
- des données informatiques partagées sur un site internet de réseautage social tel que *Twitter^{®}, Facebook^{®}, Instagram^{®}, TikTok^{®}* ou autre,
- des données vidéo partagées sur un site internet diffuseur de vidéos tel que *YouTube^{®}, Dailymotion^{®}, Twitch^{®},* ou *DLive^{®},* et
- des données informatiques publiées sur un forum internet.

Il est alors clair que chaque source d'informations 16 est par exemple une base de données interrogeable ou un site internet interrogeable via son moteur de recherche 20 interne.

Chaque moteur de recherche 20 est configuré pour, suite à la réception d'une demande appelée ci-après requête élémentaire, extraire un groupe de données informatiques de la source 16 auquel le moteur 20 est propre. Plus précisément, le moteur de recherche 20 est configuré pour sélectionner, parmi les données informatiques contenues dans la source d'informations 16, les données qui ont un lien avec la requête élémentaire reçue. A cet effet, chaque moteur de recherche 20 est par exemple configuré pour appliquer des techniques d'analyse sémantique connues en soi.

Le dispositif électronique d'échange d'informations 18 est connecté à la première entité 12, à la deuxième entité 14 et à chaque source d'informations 16. Dans l'exemple de la figure 1, le dispositif électronique d'échange d'informations 18 est un ordinateur comprenant une mémoire 24 et un processeur 26 associé à la mémoire 24. Dans cet exemple, la mémoire 24 du dispositif électronique d'échange d'informations 18 est alors apte à stocker un logiciel d'échange d'informations propre à mettre en œuvre le procédé qui sera décrit ci-après.

En variante non-représentée, le dispositif électronique d'échange d'informations 18 est réalisé au moins partiellement sous forme d'un composant logique programmable, tel qu'un FPGA (de l'anglais Field Programmable Gate Array), ou encore d'un circuit intégré, tel qu'un ASIC (de l'anglais Application Specific Integrated Circuit).

En variante encore, le dispositif d'échange d'informations 18 est réalisé sous la forme d'un ou plusieurs logiciels, c'est-à-dire sous la forme d'un programme d'ordinateur, il est en outre apte à être enregistré sur un support, non-représenté, lisible par ordinateur. Le support lisible par ordinateur est par exemple, un medium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM et EEPROM, FLASH, NVRAM), une carte magnétique ou une carte optique. Sur le support lisible est alors mémorisé un programme d'ordinateur comprenant des instructions logicielles.

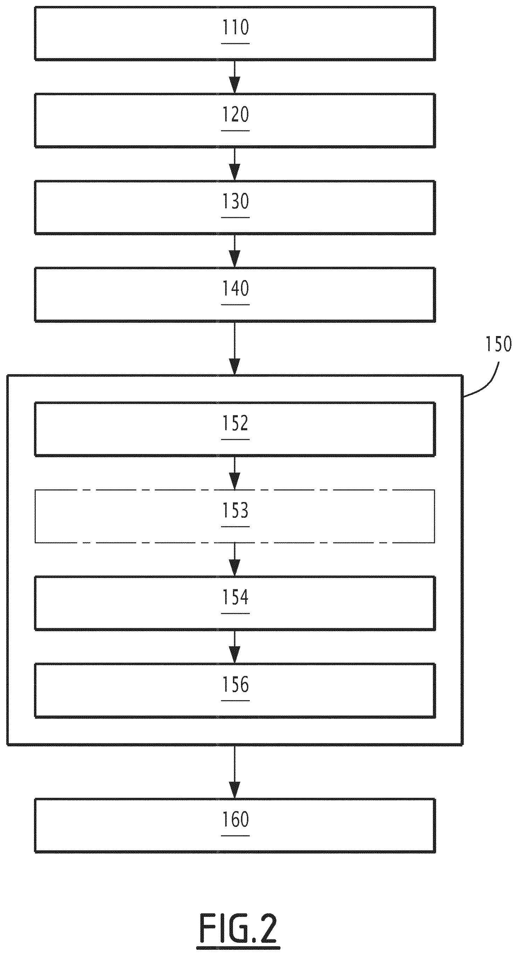

Le système électronique d'échange d'informations 18 est propre à mettre en œuvre le procédé d'échange d'informations suivant, décrit en référence à la figure 2.

Lors d'une étape d'acquisition 110, le dispositif d'échange d'informations 18 acquiert, depuis la première entité 12, la requête initiale associée à l'objet d'intérêt. La requête initiale a par exemple été entrée dans la première entité 12 par un opérateur des forces de l'ordre. La requête initiale est par exemple formulée en langage naturel. On entend par « langage naturel », une langue parlée telle que, de manière non-exhaustive, le français, l'anglais, l'espagnol, l'arabe, le portugais, le japonais ou le mandarin.

Alternativement, la requête initiale est formulée dans un langage informatique tel que le langage SPARQL, ou SQL.

A titre d'exemple, la requête est la suivante : « Qu'a acheté monsieur X le 24 décembre 2020 ? », « Quel(s) personne(s) madame Y a-t-elle rencontrée(s) entre le 16 mars 2019 et le 21 avril 2021 ? », ou encore « Que pense monsieur X des commerces de son quartier ? ». Dans un langage informatique, la requête présente par exemple la structure suivante :

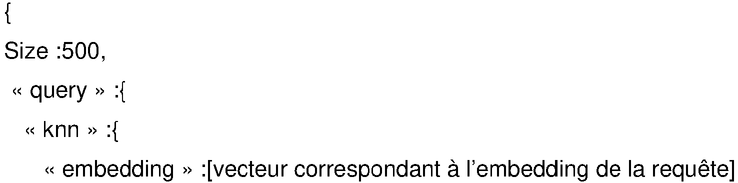

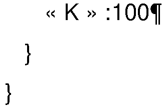

Puis, lors d'une étape de transmission 120, le dispositif d'échange d'informations 18 traduit, pour chaque moteur de recherche 20, la requête initiale en une requête élémentaire propre audit moteur de recherche 20. En effet, la requête initiale n'a pas toujours un formalisme compréhensible pour chaque moteur de recherche. Par exemple, les moteurs de recherche 20 de certains site internet tel que *Youtube^{®}, Twitter^{®}* ou *Facebook^{®}* sont configurés pour traiter des requêtes élémentaires en langage naturel, toutefois une base de données de caméra de surveillance n'est le plus souvent, pas configurée de la sorte.

A cet effet, le dispositif d'échange d'informations 18 applique par exemple un algorithme de traduction à la requête initiale.

L'algorithme de traduction comprend par exemple une analyse de la requête initiale afin d'en extraire des mots clefs ou éléments d'entités nommées. On entend par l'expression « entités nommées » des classes prédéterminées liant sémantiquement les éléments lui étant rattachés. A titre d'exemple, une date, un lieu, et une identité forment des entités nommées.

A cet effet, l'algorithme de traduction comprend par exemple l'utilisation d'une bibliothèque d'analyse sémantique propre à extraire, de la requête initiale, des caractéristiques sur son objet. Une telle bibliothèque est par exemple la bibliothèque *SPACY^{®},* qui est notamment propre à extraire des noms de personne, des lieux et des dates.

De telles bibliothèques comprennent par exemple l'application, à la requête initiale, de modèles statistiques, tels que des modèles de Markov. Ainsi, à chaque mot ou groupe de mots de la requête initiale est associée une probabilité d'appartenir à une ou plusieurs entités nommées.

Alternativement, ces bibliothèques comprennent l'application de réseau(x) de neurones, notamment de réseau(x) de neurones pré-entrainés du type *Transformer connus* en soi.

En complément facultatif, l'analyse de la requête initiale est complétée par des règles syntaxiques destinées à extraire d'autres éléments que ceux déjà inclus dans la bibliothèque SPACY^{®}, tels que des interactions entre des entités nommées.

L'algorithme de traduction comprend en outre, une fois la requête initiale analysée, la détermination des requêtes élémentaires pour chaque moteur de recherche 20. Pour chaque requête élémentaire, la détermination dépend du moteur de recherche 20. En effet, les moteurs de recherche 20 présentent le plus souvent une zone de texte configurée pour recevoir du texte et, de manière facultative des zones de filtrage. Les zones de filtrage permettent limiter la recherche indiquée dans la zone de texte, aux données respectant des filtres. Un exemple de zone de filtrage est par exemple le filtrage par date permettant de ne faire apparaitre que les données datées d'un certain jour, ou d'une certaine période de temps.

Si le moteur de recherche 20 comporte des zones de filtrage, la requête élémentaire comprend le remplissage des zones de filtrage avec un ou plusieurs mots de filtrage. Les mots de filtrage sont des mots ou groupes de mots extraits de la requête initiale lors de son analyse, et pour lesquels le moteur de recherche 20 comprend une zone de filtrage.

A titre d'exemple, si le moteur de recherche 20 comprend une zone de filtrage par date, la date du « 24 décembre 2020 » dans la requête initiale « Qu'a acheté monsieur X le 24 décembre 2020 ? » est un mot de filtrage.

La requête élémentaire comprend également le remplissage de la zone de texte à partir d'au moins les mots de la requête initiale différent des mots de filtrage.

Dans l'exemple précédent, si le moteur de recherche 20 ne comprend pas de zone de filtrage sur la personne, la requête élémentaire comportera le remplissage, dans la zone de texte, d'au moins les mots « monsieur X ».

Si le moteur de recherche 20 ne comporte pas de zone de filtrage, la requête élémentaire comprend le remplissage de la zone de texte avec la requête initiale, par exemple *stricto sensu.*

Lorsque la requête initiale est en langage naturel, le remplissage de la zone de texte est par exemple effectuépar concaténation de mots-clés, propres à être reconnus par le moteur de recherche 20 d'une source d'informations 16 respective.

Dans l'exemple où la requête initiale est « Qu'à acheter monsieur X le 24 décembre 2020 ? », dit premier exemple, le remplissage de la zone de texte comprend par exemple « Monsieur X + 24/12/2020 + magasin + achat ».

Puis, toujours lors de l'étape de transmission 120, le dispositif électronique d'échange d'informations 18 transmet, à chaque moteur de recherche 20, la requête élémentaire correspondante.

Par la suite, le moteur de recherche 20 de chaque source d'informations 16 extrait un groupe de données informatiques, de ladite source d'informations 16, en réponse à la requête élémentaire transmise depuis le dispositif d'échange d'informations 18. Les techniques d'extraction, par les moteurs de recherche 20, sont connues en soi.

Puis, lors d'une étape de réception 130, le dispositif d'échange d'informations 18 reçoit, depuis chaque moteur de recherche 20, le groupe de données informatiques extraites par ces moteurs de recherche 20. Chaque donnée informatique extraite est représentative de l'objet d'intérêt. En particulier, chaque donnée informatique extraite est en lien avec la requête élémentaire transmise au moteur de recherche 20 respectif. Par exemple, lorsque la requête élémentaire est une concaténation de mots-clés, chaque donnée informatique extraite est au moins en lien à l'un des mots-clés.

Dans le premier exemple, un des groupes de données extraites comprend par exemple toutes les données incluant ou étant liées à au moins deux des mots clés, tel que « monsieur X » et « 24/12/2020 », « monsieur X » et « magasin », ou encore « 24/12/2020 » et « achat ».

Dans le premier exemple, les données extraites sont par exemple les suivantes :
- un sms envoyé par monsieur X, à madame Y, le 24 décembre 2020 à 10h00, indiquant : « Quel est le prix d'achat des baguettes ? » et la réponse de madame Y à 11h00 indiquant « 5 euros pour l'achat d'une pain sans confiture et 6 euros avec la confiture »,
- un tweet de monsieur X à 11h30 indiquant « Eviter d'acheter les baguettes à madame Y, elles sont vraiment trop chères, n'y aller pas ... »
- une transcription d'un appel téléphonique entre monsieur X et monsieur W à 12h00 indiquant :
   - Allo, je pense que nous devons changer de boulangerie, les prix d'achat ont augmenté de façon indécente (monsieur X)
   - Mince, tu penses pouvoir changer rapidement et acheter du pain autre part ? (monsieur W)
   - Oui (monsieur X),
- une transcription d'une conversation, entre monsieur X et madame Y à 12h30, écouté depuis un ordiphone de monsieur X, et indiquant « ton prix d'achat est beaucoup trop haut, tu baisses ou on va faire nos achats autre part ! », et
- une géolocalisation de monsieur X à 12h30, proche de la boulangerie « boulangerie de madame Y ».

Ensuite, lors d'une étape de conversion 140, le dispositif d'échange d'informations 18 convertit chaque donnée informatique extraite en un vecteur de donnée. Si la donnée informatique extraite est un texte, le dispositif d'échange d'informations 18 applique par exemple un algorithme de traitement automatique du langage (TAL ou NLP de l'anglais *Natural Language Programming*) permettant d'obtenir un vecteur de donnée sémantiquement lié à la donnée informatique extraite. On entend par l'expression « sémantiquement liées » que les vecteurs de données correspondant à des textes sensiblement similaires sont algébriquement plus proches que des vecteurs de donnée correspondant à des textes dont le sens est différent. On entend par « algébriquement plus proche » le fait qu'une distance mathématique entre deux vecteurs soit plus faible qu'entre l'un des deux vecteurs et un troisième vecteur.

Lorsque la donnée extraite comprend du texte, la conversion de la donnée en un vecteur de donnée comprend par exemple des techniques de plongement de mots (de l'anglais, *word embedding*) connues en soi. Ces techniques comportent par exemple l'application d'un réseau de neurones profond pré-entrainé, du type *Transformer,* à une pluralité de mots du texte, ou au texte en entier, pour la conversion du texte en un vecteur dont la dimension est prédéterminée. Le vecteur de donnée est par exemple formé par l'espace latent du réseau de neurones. On entend par « espace latent » l'avant-dernière couche du réseau de neurones. Autrement dit l'espace latent forme la dernière couche du réseau de neurones qui n'est pas dédiées à une classification spécifique, telle que la reconnaissance d'un texte.

Alternativement, ces techniques se basent par exemple sur le groupe de modèles *Word2vec* développé par *Google^{®}.*

On entend par l'expression « réseau de neurones profond » (de l'anglais, *Deep Neural Network*) un réseau de neurones comprenant un couche d'entrée, une couche de sortie et au moins deux couches cachées.

Chaque vecteur de donnée comprend alors une pluralité de composantes numériques, par exemple plus de 500 composantes numériques.

Si la donnée extraite est une image, lors de l'étape de conversion 140, le dispositif d'échange d'informations 18 applique à ladite image un algorithme de traitement d'image, par exemple basé sur des réseaux de neurones convolutionnels (de l'anglais, *Convolutionnal Neural Networks*)*,* des réseaux de neurones résiduels (de l'anglais, *Residual Neural Netwoks*)*,* ou des réseaux de neurones du type groupe de géométrie visuelle ou VGG (de l'anglais, *Visual Geometry Group*)*.* Tous ces types de réseaux de neurones sont des réseaux de neurones profonds. Plus précisément, l'algorithme effectue une concaténation des couches desdits réseaux de neurones afin d'obtenir un vecteur de donnée à valeur numérique.

Si la donnée extraite est une vidéo, alors elle comprend une pluralité d'images. Ainsi, chaque image de la vidéo est traitée comme si la donnée extraite était une image générant alors un vecteur de donnée élémentaire. Puis, le vecteur de donnée propre à la donnée extraite est obtenu par combinaison des vecteurs de donnée élémentaires, telle qu'une combinaison linéaire desdits vecteurs de donnés élémentaires.

Lors de l'étape de conversion 140, bien que les conversions des textes et des images, en vecteurs de donnée, soient distinctes, les vecteurs de donnée obtenus comprennent le même nombre de composantes numériques. Ces conversions sont réalisées de telle sorte que les vecteurs de donnée d'un texte et d'une image soient comparables. Ainsi, un vecteur de donnée d'un texte concernant un premier sujet sera algébriquement plus proche d'un vecteur de donnée d'une image représentant ce premier sujet, que d'un vecteur de donnée d'un texte concernant un deuxième sujet distinct du premier sujet. Par exemple, le vecteur de donnée d'un tweet sur un restaurant sera algébriquement plus proche du vecteur de donnée d'une photo de ce restaurant que du vecteur de donnée d'un sms (de l'anglais *Short Message Service*) concernant un problème informatique.

Toujours lors de l'étape de conversion 140, le dispositif d'échange d'informations 18 convertit également la requête initiale en un vecteur de requête. A cet effet, le dispositif d'échange d'informations 18 applique, à la requête initiale, le même algorithme de conversion que celui appliqué aux données extraites. Ainsi, le vecteur de requête comprend le même nombre de coordonnés que chaque vecteur de donnée et est en outre comparable aux vecteurs de donnée.

Toujours lors de l'étape de conversion 140, le dispositif d'échange d'informations 18 établit une table de correspondance entre chaque vecteur de donnée et la donnée informatique extraite correspondante. Plus spécifiquement, la table de correspondance comprend par exemple, pour chaque donnée extraite, le vecteur de donnée de ladite donnée extraite et un pointeur de ladite donnée.

Chaque pointeur étant par exemple un pointeur de ladite donnée au sein de la mémoire 24 du dispositif d'échange d'informations 18 lorsqu'il en comprend une. Dans le cas d'un programme informatique, le pointeur réfère par exemple vers la mémoire de l'ordinateur mettant en œuvre le programme informatique.

Alternativement, la table de correspondance comprend, pour chaque donnée extraite, le vecteur de donnée de la donnée extraite et un lien vers la donnée originale dans la source d'information 16. Le lien est alors une adresse URI (de l'anglais, *Uniform Ressource Identifier*) tel qu'un lien HTML (de l'anglais, *HyperText Markup Language*) pointant vers ladite donnée dans la source d'informations 16.

La table de correspondance permet donc de lier de manière unique, chaque vecteur de donnée à la donnée extraite à partir de laquelle il a été obtenu.

Puis, lors d'une étape de génération 150, le dispositif d'échange d'informations 18 génère, à partir de l'ensemble des données informatiques extraites, une liste ordonnée de données.

A cet effet, lors d'une sous-étape d'application 152, le dispositif d'échange d'informations 18 applique, aux vecteurs de donnée et au vecteur de requête, un algorithme d'apprentissage automatique pour obtenir un indicateur de similitude vectorielle pour chaque vecteur de donnée. L'indicateur de similitude vectorielle est donc propre à chaque donnée extraite.

Chaque indicateur de similitude vectorielle est par exemple l'inverse de la distance algébrique entre le vecteur de requête et un des vecteurs de donnée. On entend par l'expression « l'inverse de la distance algébrique », l'application de la fonction mathématique « inverse » à la distance algébrique. Dans ce cas, l'algorithme d'apprentissage non-supervisée est alors par exemple un calcul de distance entre le vecteur de requête et chaque vecteur de donnée, selon une métrique prédéterminée.

Alternativement, l'algorithme d'apprentissage automatique est par exemple un algorithme des plus proches voisins permettant de classifier les K vecteurs de donnée plus proches voisins du vecteur de requête, K étant un entier prédéterminé. L'indicateur de similitude vectorielle est alors fonction de l'entier K.

L'indicateur de similitude vectorielle est par exemple déterminé à l'aide d'une similarité cosinus (de l'anglais, *Cosine Similarity*) entre le vecteur de requête et chaque vecteur de donnée. Alternativement, l'indicateur de similitude vectorielle est déterminé à l'aide d'une distance euclidienne entre le vecteur de requête et chaque vecteur de donnée.

Ensuite, lors d'une sous-étape de détermination 154, le dispositif d'échange d'informations 18 détermine l'ordre de la liste ordonnée de données par comparaison des indicateurs de similitude vectorielle entre eux, et à partir de la table de correspondance.

Pour cela, le dispositif d'échange d'informations 18 détermine par exemple l'ordre de la liste ordonnée de données comme étant l'ordre des données dont les vecteurs de donnée ont l'indicateur de similitude vectorielle le plus élevé. Ainsi, la donnée extraite dont l'ordre est le premier est la donnée extraite dont le vecteur de donnée est le plus proche algébriquement du vecteur de requête.

Lors d'une sous-étape d'élaboration 156, le dispositif d'échange d'informations 18 élabore la liste ordonnée de données comme comprenant les N premières données extraites selon l'ordre déterminé, N étant un nombre entier prédéfini. Autrement dit, le dispositif d'échange d'informations 18 établit la liste ordonnée de données à partir de l'ordre déterminé, lié aux vecteurs de donnée, et de la table de correspondance faisant le lien entre chaque donnée et son vecteur de donnée associé.

Alternativement, le dispositif d'échange d'informations 18 élabore la liste comme comprenant chaque donnée extraite, ordonnée selon l'ordre déterminé, et dont l'indicateur de similitude vectorielle dépasse un seuil prédéfini. Dans ce cas, il est également considéré par la suite que la liste comprend N données extraites.

La liste ordonnée de données est par exemple un fichier textuel présentant une concaténation de chacune des N premières données extraites selon l'ordre déterminé. Les données de la liste sont alors labélisées, par exemple par leur ordre d'apparition dans l'ordre déterminé.

Dans le premier exemple, la liste de données comprend par exemple :
- un sms envoyé par monsieur X, à madame Y, le 24 décembre 2020 à 10h00, indiquant : « Quel est le prix d'achat des baguettes ? » et la réponse de madame Y à 11h00 indiquant « 5 euros pour l'achat d'une pain sans confiture et 6€ avec la confiture », et
- un tweet de monsieur X à 11h30 indiquant « Eviter d'acheter les baguettes à madame Y, elles sont vraiment trop chères, n'y aller pas ... ».

En effet, ces deux données indiquent explicitement ce que monsieur X a souhaité acheter le 24 décembre 2020.

En variante, la liste ordonnée de données est uniquement un fichier textuel comprenant les liens hypertextes des N premières données extraites classées selon l'ordre déterminé. Chaque lien hypertexte renvoie alors à ladite donnée dans la source d'informations 16.

En variante encore, la liste ordonnée de données est un fichier textuel comprenant les pointeurs des N premières données extraites classées selon l'ordre déterminé.

Ensuite, lors d'une étape d'émission 160, le dispositif d'échange d'informations 18 émet, en direction de la deuxième entité 14, la liste ordonnée des données.

En variante et si les données extraites comprennent des textes, l'étape de génération 150 comprend en outre une sous-étape de calcul 153 lors de laquelle le dispositif d'échange d'informations 18 calcule, pour chaque texte extrait, un indicateur de similitude textuelle entre la requête initiale et ledit texte extrait. L'indicateur de similitude textuelle est par exemple déterminé à l'aide d'une similarité de type Okapi/BM25 connue en soi. Les techniques de calcul de la similarité Okapi/BM25 comprend l'analyse de la fréquence d'apparition de certains mots dans la requête initiale et dans les textes extrait. Sur la figure 2, la sous-étape 153 est représentée par une case dont le contour est en trait pointillé pour souligner que cette sous-étape n'est présente dans le procédé que selon une variante. Selon cette variante, lors de la sous-étape de détermination 156, le dispositif d'échange d'information 18 détermine l'ordre à partir des indicateurs de similitude vectorielle et des indicateurs de similitude textuelle. Plus spécifiquement, pour chaque donnée extraite comprenant un texte, le dispositif d'échange d'information 18 effectue une combinaison, par exemple une combinaison linéaire, entre l'indicateur de similitude textuelle est l'indicateur de similitude vectorielle pour former un indicateur de similitude. L'indicateur de similitude est alors comparé aux indicateurs de similitude vectorielle de chaque donnée ne comprenant pas de texte pour la détermination l'ordre.

Ainsi, le procédé d'échange d'information selon l'invention permet de limiter la quantité de données transitant entre la première entité 12, les sources d'informations 16 et la deuxième entité 14. En effet, l'étape de génération 150 permet un filtrage des données informatiques comprises dans les sources d'informations 16 afin de limiter le volume de données transitant entre les entités 12, 14 ou dispositif 18.

En outre, le procédé selon l'invention permet un gain de temps de la deuxième entité 14 puisque ladite deuxième entité 14 ne doit traiter que des données déjà déterminées comme étant pertinentes relativement à la requête initiale.

De plus, le procédé selon l'invention permet de comparer les données extraites provenant de différentes sources d'informations 16 comprenant des données hétérogènes et complémentaires pour l'établissement d'une liste ordonnée de données.

## Revendications

1. Procédé d'échanges d'informations sur un objet d'intérêt entre une première (12) et une deuxième (14) entités, mise en œuvre par un dispositif électronique d'échange d'information (18), le dispositif électronique d'échange d'informations (18) étant connecté à la première entité (12), à la deuxième entité (14) et à au moins une source d'informations (16) interrogeable via un moteur de recherche (20) propre à cette source, la ou chaque source d'informations (16) comprenant des données informatiques, chaque donnée informatique correspondant à au moins un élément parmi : un texte, une vidéo, une image,
le procédé comprenant les étapes suivantes :
- acquisition (110), depuis la première entité (12), d'une requête initiale associée à l'objet d'intérêt,
- pour le ou chaque moteur de recherche (20), transmission (120) d'une requête élémentaire à ce moteur de recherche (20), chaque requête élémentaire étant déterminée à partir de la requête initiale et propre au moteur de recherche correspondant (20),
- réception (130), depuis le ou chaque moteur de recherche (20), d'un groupe de données informatiques extraites par ce moteur de recherche (20) de la source d'informations (16) correspondante, chaque donnée informatique extraite étant représentative de l'objet d'intérêt,
- conversion (140) de chaque donnée informatique extraite et de la requête initiale respectivement en un vecteur de donnée et en un vecteur de requête en utilisant un algorithme de conversion prédéterminé,
- génération (150) à partir de l'ensemble des données informatiques extraites d'une liste ordonnée de données selon un ordre déterminé en fonction de chaque vecteur de donnée et du vecteur de requête,
- émission (160), vers la deuxième entité (14), de ladite liste ordonnée de données,
dans lequel l'étape de génération (150) de la liste ordonnée de données comprend :
- application (152) d'un algorithme d'apprentissage automatique non-supervisé aux vecteurs de donnée et au vecteur de requête pour obtenir un indicateur de similitude vectorielle pour chaque donnée extraite,
- détermination (154) de l'ordre de la liste ordonnée de données, par comparaison des indicateurs de similitudes vectorielles entre eux, et
- élaboration (156) de la liste ordonnée de données comme comprenant les N première(s) donnée(s) extraite(s) selon l'ordre déterminé, N étant un nombre entier prédéfini.

2. Procédé selon la revendication 1, dans lequel la deuxième entité (14) est un logiciel de renseignement destiné à mettre en œuvre des fonctionnalités de surveillance d'au moins une personne, dite personne sous-surveillance, l'objet d'intérêt étant ladite personne sous-surveillance.

3. Procédé selon la revendication 1 ou 2, dans lequel les données informatiques de chaque source d'informations (16) sont au moins l'un parmi :
- des données informatiques obtenues suite à une écoute d'une personne sous-surveillance,
- des données informatiques de géolocalisation d'une personne sous-surveillance,
- des données vidéos issues d'une caméra de surveillance,
- des données informatiques partagées sur un site internet de réseautage social,
- des données vidéos partagées sur un site internet diffuseur de vidéos, et
- des données informatiques publiées sur un forum internet.

4. Procédé selon l'une quelconque des revendications précédentes, dans lequel la première entité (12) est un logiciel.

5. Procédé selon l'une quelconque des revendications précédentes, dans lequel le groupe de données informatiques extraites comprend au moins un texte,
l'étape de génération (150) de la liste ordonnée de données comprenant en outre :
- pour le ou chaque texte extrait, calcul (153) d'un indicateur de similitude textuelle entre la requête initiale et ledit texte extrait,
lors de la sous-étape de détermination (154) de l'étape de génération (150) de la liste ordonnée de données, l'ordre de la liste ordonnée de données est déterminé par comparaison des indicateurs de similitudes vectorielles entre eux et par comparaison des indicateurs de similitude textuelle entre eux.

6. Procédé selon l'une quelconque des revendications précédentes, dans lequel chaque requête élémentaire est déterminée à partir de la requête initiale par application d'un algorithme de traduction comprenant :
- l'analyse de la requête initiale pour l'extraction de caractéristiques liées à des classes prédéterminées, et
- pour au moins un moteur de recherche (20), la génération d'une requête élémentaire comprenant au moins un mot de filtrage propre à permettre le filtrage de données informatiques dans la source d'informations (18) correspondant au moteur de recherche (20).

7. Procédé selon l'une quelconque des revendications précédentes, dans lequel, lors de l'étape de conversion (140), l'algorithme de conversion comprend :
- pour chaque donnée informatique extraite, l'application à la donnée informatique extraite, d'un réseau de neurones profond pré-entrainé pour l'obtention du vecteur de donnée associé à la donnée, et
pour la requête initiale, l'application du réseau de neurones profond pré-entrainé à la requête pour l'obtention du vecteur de requête.

8. Produit programme d'ordinateur comportant des instructions logicielles qui, lorsque mises en œuvre par un équipement informatique, mettent en œuvre le procédé d'échanges d'informations selon l'une quelconque des revendications précédentes.

9. Dispositif électronique d'échange d'informations (18) comprenant des moyens techniques adaptés pour mettre en œuvre le procédé d'échanges d'informations selon l'une quelconque des revendications 1 à 7.

## Patentansprüche

1. Verfahren zum Austausch von Informationen auf einem Objekt von Interesse zwischen einer ersten (12) und einer zweiten (14) Einheit, implementiert durch eine elektronische Informationsaustauschvorrichtung (18), wobei die elektronische Informationsaustauschvorrichtung (18) mit der ersten Einheit (12), der zweiten Einheit (14) und mit mindestens einer Informationsquelle (16) verbunden ist, die über eine Suchmaschine (20), die dieser Quelle eigen ist, abfragbar ist, die oder jede Informationsquelle (16) umfassend Rechnerdaten, wobei alle Rechnerdaten mindestens einem Element von Folgenden entsprechen: einem Text, einem Video, einem Bild,
das Verfahren umfassend die folgenden Schritte:
- erfassen (110), seitens der ersten Einheit (12), einer anfänglichen Anfrage, die mit dem Objekt von Interesse assoziiert ist,
- für die oder jede Suchmaschine (20), Übertragen (120) einer elementaren Suchanfrage an diese Suchmaschine (20), wobei jede elementare Anfrage anhand der anfänglichen Anfrage bestimmt wird und der entsprechenden Suchmaschine (20) eigen ist,
- Empfangen (130), seitens der oder jeder Suchmaschine (20), einer Gruppe von Rechnerdaten, die von dieser Suchmaschine (20) aus der entsprechenden Informationsquelle (16) extrahiert werden, wobei jeder extrahierte Rechnerdatensatz repräsentativ für das Objekt von Interesse ist,
- Konvertieren (140) aller extrahierten Rechnerdaten und der anfänglichen Anfrage jeweils in einen Datenvektor und einen Anfragevektor unter Verwendung eines vorbestimmten Konvertierungsalgorithmus,
- Erzeugen (150), anhand des Satzes von Rechnerdaten, die aus einer geordneten Liste extrahiert werden, von Daten in einer Reihenfolge, die abhängig von jedem Datenvektor und dem Anfragevektor bestimmt wird,
- Senden (160), an die zweite Einheit (14), der geordneten Datenliste,
wobei der Schritt eines Erzeugens (150) der geordneten Datenliste Folgendes umfasst:
- Anwendung (152) eines nicht überwachten maschinellen Lernalgorithmus auf die Datenvektoren und den Anfragevektor, um einen Vektorähnlichkeitsindikator für alle extrahierten Daten zu erlangen,
- Bestimmen (154) der Reihenfolge der geordneten Datenliste, indem die Vektorähnlichkeitsindikatoren miteinander verglichen werden, und
- Erstellen (156) der geordneten Datenliste als umfassend die ersten N Daten, die in der bestimmten Reihenfolge extrahiert werden, wobei N eine vordefinierte ganze Zahl ist.

2. Verfahren nach Anspruch 1, wobei die zweite Einheit (14) eine Intelligenz-Software ist, die dazu bestimmt ist, Funktionen zur Überwachung von mindestens einer Person, der sogenannten Person unter Überwachung, zu implementieren, wobei das Objekt von Interesse die Person unter Überwachung ist.

3. Verfahren nach Anspruch 1 oder 2, wobei die Rechnerdaten von jeder Informationsquelle (16) mindestens eines von Folgenden sind:
- Rechnerdaten, die durch ein Abhören einer Person unter Überwachung erlangt werden,
- Rechnerdaten zur Geolokalisierung einer Person unter Überwachung,
- Videodaten, die von einer Überwachungskamera stammen,
- Rechnerdaten, die auf einer Website für Social Networking geteilt werden,
- Videodaten, die auf einer Website geteilt werden, die Videos verbreitet, und
- Rechnerdaten, die in einem Internetforum veröffentlicht werden.

4. Verfahren nach einem der vorherigen Ansprüche, wobei die erste Einheit (12) eine Software ist.

5. Verfahren nach einem der vorherigen Ansprüche, wobei die Gruppe von extrahierten Rechnerdaten mindestens einen Text umfasst,
wobei der Schritt eines Erzeugens (150) der geordneten Datenliste ferner Folgendes umfassend:
- für den oder jeden extrahierten Text, Berechnen (153) eines Indikators für Textähnlichkeit zwischen der anfänglichen Anfrage und dem extrahierten Text,
wobei in dem Teilschritt eines Bestimmens (154) des Schritts eines Erzeugens (150) der geordneten Datenliste die Reihenfolge der geordneten Datenliste durch Vergleichen der Vektorähnlichkeitsindikatoren miteinander und durch Vergleichen der Textähnlichkeitsindikatoren miteinander bestimmt wird.

6. Verfahren nach einem der vorherigen Ansprüche, wobei jede elementare Anfrage anhand der anfänglichen Anfrage durch Anwenden eines Übersetzungsalgorithmus bestimmt wird, umfassend:
- die Analyse der anfänglichen Anfrage zur Extraktion von Merkmalen, die mit vorbestimmten Klassen verbunden sind, und
- die Erzeugung einer elementaren Anfrage, für mindestens eine Suchmaschine (20), umfassend mindestens ein Filterwort, das geeignet ist, um die Filterung von Rechnerdaten in der Informationsquelle (18) zu ermöglichen, die der Suchmaschine (20) entspricht.

7. Verfahren nach einem der vorherigen Ansprüche, wobei der Konvertierungsalgorithmus in dem Schritt eines Konvertierens (140) Folgendes umfasst:
- für alle extrahierten Rechnerdaten, Anwenden eines vortrainierten tiefen neuronalen Netzes auf die extrahierten Rechnerdaten, um den mit den Daten assoziierten Datenvektor zu erlangen, und
für die anfängliche Anfrage, Anwenden des vortrainierten tiefen neuronalen Netzes auf die Anfrage, um den Anfragevektor zu erlangen.

8. Rechnerprogrammprodukt, umfassend Softwareanweisungen, die, wenn sie von einer Rechenvorrichtung durchgeführt werden, das Informationsaustauschverfahren nach einem der vorherigen Ansprüche durchführen.

9. Elektronische Informationsaustauschvorrichtung (18), umfassend technische Einrichtungen, die angepasst sind, um das Verfahren zum Informationsaustausch nach einem der Ansprüche 1 bis 7 zu implementieren.

## Claims

1. A method for exchanging information about an object of interest between a first (12) and a second (14) entity, implemented by an electronic information exchange device (18), the electronic information exchange device (18) being connected to the first entity (12), the second entity (14), and at least one source of information (16) that can be queried via a search engine (20) specific to this source, each source of information (16) comprising computer data, each computer data corresponding to at least one element among: a text, a video, an image,
the method comprising the following steps:
- acquisition (110), from the first entity (12), of an initial request associated with the object of interest,
- for the or each search engine (20), transmission (120) of an elementary request to this search engine (20), each elementary request being determined from the initial request and specific to the corresponding search engine (20),
- receipt (130), from the or each search engine (20), of a group of computer data extracted by this search engine (20) from the corresponding source of information (16), each extracted computer data being representative of the object of interest,
- conversion (140) of each piece of extracted computer data and the initial request respectively into a data vector and a request vector using a predetermined conversion algorithm,
- generation (150) from all the extracted computer data of an ordered list of data according to an order determined based on each data vector and the request vector,
- emission (160), to the second entity (14), of said ordered list of data.
wherein the step of generating (150) the ordered list of data comprises:
- application (152) of an unsupervised machine learning algorithm to the data vectors and the request vector to obtain a vector similarity indicator for each piece of extracted data,
- determination (154) of the order of the ordered list of data, by comparing the vector similarity indicators among themselves, and
- preparation (156) of the ordered list of data as comprising the first N extracted data or piece of data according to the determined order, N being a predefined integer number.

2. The method according to claim 1, wherein the second entity (14) is an intelligence software intended to implement surveillance functionalities of at least one person, called the person under surveillance, the object of interest being said person under surveillance.

3. The method according to claim 1 or 2, wherein the computer data of each source of information (16) are at least one among:
- computer data obtained following a process of listening to a person under surveillance,
- geolocation computer data of a person under surveillance,
- video data from a surveillance camera,
- computer data shared on a social networking website,
- video data shared on a video broadcasting website, and
- computer data published on an internet forum.

4. The method according to any of the preceding claims, wherein the first entity (12) is a software.

5. The method according to any of the preceding claims, wherein the group of extracted computer data comprises at least one text, the step of generating (150) the ordered list of data further comprising:
- for the or each extracted text, calculation (153) of a textual similarity indicator between the initial request and said extracted text,
during the sub-step of determining (154) the step of generating (150) the ordered list of data, the order of the ordered list of data is determined by comparing the vector similarity indicators among themselves and by comparing the textual similarity indicators among themselves.

6. The method according to any of the preceding claims, wherein each elementary request is determined from the initial request by applying a translation algorithm comprising:
- analysis of the initial request for extracting characteristics related to predetermined classes, and
- for at least one search engine (20), generation of an elementary request comprising at least one specific filtering word to allow filtering of computer data in the source of information (18) corresponding to the search engine (20).

7. The method according to any of the preceding claims, wherein, during the conversion step (140), the conversion algorithm comprises:
- for each piece of extracted computer data, application to the extracted computer data, of a pre-trained deep neural network to obtain the data vector associated with the data, and
for the initial request, application of the pre-trained deep neural network to the request to obtain the request vector.

8. A computer program product including software instructions which, when implemented by computer equipment, implement the method for exchanging information according to any of the preceding claims.

9. An electronic information exchange device (18) comprising technical means adapted to implement the method for exchanging information according to any of claims 1 to 7.
